# EUROPEAN PATENT SPECIFICATION

(11) **EP 4 175 789 B1**
(45) Date of publication and mention of the grant of the patent: **07.08.2024**
(21) Application number: 21736295.3
(22) Date of filing: 24.06.2021
(51) Int. Cl.: B25F 5/00, B23Q 11/00, B26D 7/22, F16P 3/14

(54) **POWER TOOLS AND METHODS OF OPERATING POWER TOOLS**
ELEKTROWERKZEUGE UND VERFAHREN ZUM BETRIEB VON ELEKTROWERKZEUGEN
OUTILS ÉLECTRIQUES ET PROCÉDÉS DE FONCTIONNEMENT D'OUTILS ÉLECTRIQUES

(30) Priority: 01.07.2020 US 202063046975 P
(43) Date of publication of application: 10.05.2023
(60) Divisional application: 24180329.5
(73) Proprietor: Festool GmbH, 73240 Wendlingen am Neckar (DE)
(72) Inventor: DIETER, Christoph, 72793 Pfullingen (DE); KELLER, Moritz, 70734 Fellbach (DE); HILPERT, Dominik, 73079 Süßen (DE)
(74) Representative: Herrmann, Jochen
(86) International application number: PCT/EP2021/067382
(87) International publication number: WO 2022/002756

(56) References cited:
- US-B1- 6 376 939
- US-B1- 8 122 798
- US-B2- 9 724 840

## Description

### Related Application

This application claims priority to U.S. Provisional Patent Application No. 63/046,975, which was filed on July 1, 2020.

### Field of the Disclosure

The present disclosure relates generally to power tools and to methods of operating power tools.

### Background of the Disclosure

Power tools may utilize a cutting tool to cut a workpiece. The cutting tool generally is sharp and moves rapidly during operation of the power tool. As such, the cutting tool can, in some instances, represent a safety hazard to a user of the power tool. Some power tools include guards and/or other mechanisms to protect the user from contact with the cutting tool. However, it still may be desirable to have secondary and/or additional safety mechanisms in place. Some such secondary and/or additional safety mechanisms have been developed for some power tools; however, they often are specific to a particular type of power tool and/or are one-time-use safety mechanisms that may be destructive to the cutting tool and/or to at least one component of the safety mechanism. Additionally, or alternatively, known secondary and/or additional safety mechanisms may not be amenable to installation in a wide range of power tools. Thus, there exists a need for improved power tools and/or for improved methods of operating power tools. US 9 724 840 B2 discloses the preamble of claim 1.

### Summary of the Disclosure

Power tools and methods of operating power tools are disclosed herein. The power tools, which may include and/or be battery powered and/or cordless power tools, include a motor including a motor shaft configured to rotate about a shaft rotational axis. The power tools also include a sensor assembly configured to generate a differential voltage signal that is indicative of a distance between an individual and a cutting tool being less than a threshold distance. The sensor assembly also is configured to produce a sensor assembly output that is based upon the differential voltage signal. The power tools further include an analysis circuit configured to receive the sensor assembly output and to generate a trigger signal responsive to the sensor assembly output being outside a nominal sensor assembly output range. The power tools also include a mechanical reaction mechanism configured to insulate the individual from the cutting tool responsive to receipt of the trigger signal. The sensor assembly includes a bridge circuit configured to generate the differential voltage signal. The bridge circuit includes a reference branch, which is configured to generate a reference branch signal at a reference branch voltage, and a detection branch, which is configured to generate a detection branch signal at a detection branch voltage. The differential voltage signal includes a difference between the reference branch voltage and the detection branch voltage.

The methods include blocking supply of electric current to a motor of the power tool and verifying operation of a sensor assembly of the power tool. The sensor assembly is configured to generate a differential voltage signal that is indicative of a distance between an individual and a cutting tool of the power tool being less than a threshold distance. The methods further include permitting supply of electric current to the motor responsive to successful verification of operation of the sensor assembly. The methods further include calibrating the sensor assembly. The sensor assembly includes a bridge circuit, and further the calibrating includes balancing the bridge circuit. Balancing the bridge circuit includes balancing a reference branch voltage of a reference branch of the bridge circuit and a detection branch voltage of a detection branch of the bridge circuit.

### Brief Description of the Drawings

Fig. 1 is a schematic illustration of examples of power tools according to the present disclosure.
Fig. 2 is a schematic illustration of examples of a sensor assembly that may be utilized with power tools, according to the present disclosure.
Fig. 3 is a schematic illustration of an example of a sensor assembly that may be utilized with power tools, according to the present disclosure.
Fig. 4 is a schematic illustration of an example of a sensor assembly that may be utilized with power tools, according to the present disclosure.
Fig. 5 is a schematic illustration of an example of a sensor assembly that may be utilized with power tools, according to the present disclosure.
Fig. 6 is a schematic illustration of an example of a sensor assembly that may be utilized with power tools, according to the present disclosure.
Fig. 7 is a flowchart depicting examples of methods of operating power tools, according to the present disclosure.
Fig. 8 is a flowchart depicting examples of methods of operating power tools, according to the present disclosure.
Fig. 9 is a flowchart depicting examples of methods of operating power tools, according to the present disclosure.
Fig. 10 is a flowchart depicting examples of methods of operating power tools, according to the present disclosure.
Fig. 11 is a flowchart depicting examples of methods of operating power tools, according to the present disclosure.

### Detailed Description and Best Mode of the Disclosure

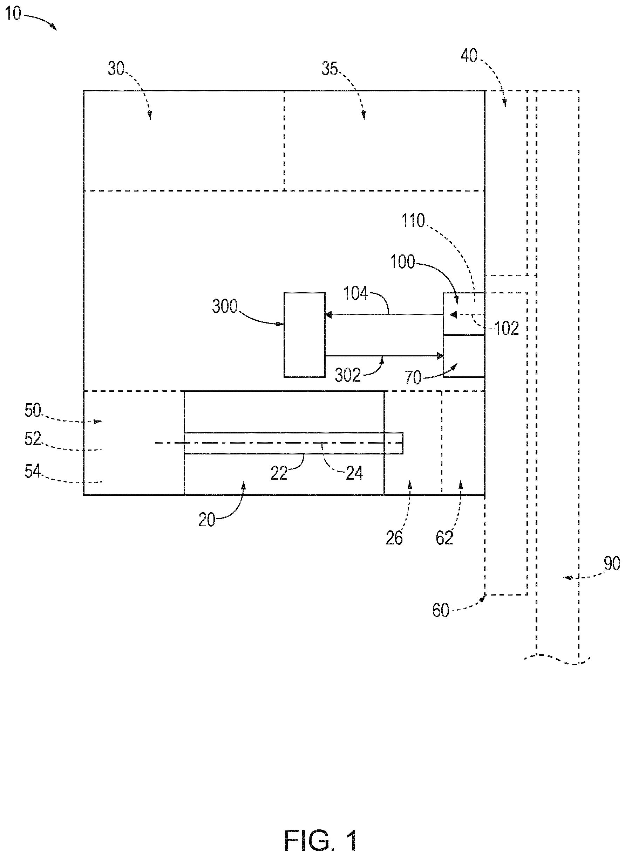

Figs. 1-11 provide examples of power tools 10, of sensor assemblies 100 that is utilized with power tools 10, and/or of methods 400/500/600/700/800, according to the present disclosure. Elements that serve a similar, or at least substantially similar, purpose are labeled with like numbers in each of Figs. 1-11, and these elements may not be discussed in detail herein with reference to each of Figs. 1-11. Similarly, all elements may not be labeled in each of Figs. 1-11, but reference numerals associated therewith may be utilized herein for consistency. Elements, components, and/or features that are discussed herein with reference to one or more of Figs. 1-11 may be included in and/or utilized with any of Figs. 1-11 without departing from the scope of the present disclosure.

In general, elements that are likely to be included in a particular embodiment are illustrated in solid lines, while elements that are optional are illustrated in dashed lines. However, elements that are shown in solid lines may not be essential and, in some embodiments, may be omitted without departing from the scope of the present disclosure.

Fig. 1 is a schematic illustration of examples of power tools 10 according to the present disclosure. As illustrated in solid lines in Fig. 1, power tools 10 include a motor 20, a mechanical reaction mechanism 70, a sensor assembly 100, and an analysis circuit 300. As illustrated in dashed lines in Fig. 1, power tools 10 may include and/or may be utilized with a cutting tool 60.

Motor 20 includes a motor shaft 22 that is configured to rotate about a shaft rotational axis 24. Cutting tool 60, when present, is configured to be actuated by the motor to act upon and to cut a workpiece 90. Sensor assembly 100 is configured to generate a differential voltage signal 102, which is indicative of a distance between an individual, such as a user of the power tool, and the cutting tool being less than a threshold distance. In some examples, the threshold distance may include and/or be a finite distance between the individual and the cutting tool. Examples of the finite distance include finite distances of less than 10 millimeters (mm), less than 8 mm, less than 6 mm, less than 4 mm, less than 3 mm, less than 2 mm, less than 1 mm, less than 0.5 mm, less than 0.1 mm, at least 0.01 mm, at least 0.05 mm, at least 0.1 mm, at least 0.5 mm, and/or at least 1 mm. In some examples, the threshold distance may include and/or be contact, or the initiation of contact, between the user and the cutting tool. Stated another way, and in some such examples, the threshold distance may be negligible and/or may be zero.

Sensor assembly 100 is configured to produce a sensor assembly output 104 that is based, at least in part, on the differential voltage signal. Analysis circuit 300 is configured to receive sensor assembly output 104 and to generate a trigger signal 302 responsive to the sensor assembly output being outside a nominal sensor assembly output range. Mechanical reaction mechanism 70 is configured to receive trigger signal 302 and to insulate the individual from the cutting tool responsive to receipt of the trigger signal.

During operation of power tools 10, motor 20 is utilized to actuate cutting tool 60 to cut workpiece 90. Prior to and/or during actuation of cutting tool 60, sensor assembly 100 generates differential voltage signal 102, and sensor assembly 100 produces sensor assembly output 104 based upon the differential voltage signal. If and/or when differential voltage signal 102 indicates that the distance between the individual and the cutting tool is less than the threshold distance, such as when there may be a potential for injury to the individual via contact with the cutting tool, analysis circuit 300 generates trigger signal 302, which directs mechanical reaction mechanism 70 to insulate the individual from the cutting tool. Thus, power tools 10, according to the present disclosure, may include an electro-mechanical safety mechanism, which includes at least sensor assembly 100, analysis circuit 300, and mechanical reaction mechanism 70, that protects the individual from contact with the cutting tool.

Conventional electro-mechanical safety mechanisms exist for certain power tools, such as stationary table saws. Examples of such conventional electro-mechanical safety mechanisms, which may include and/or utilize conventional mechanical reaction mechanisms, conventional sensor assemblies, and/or conventional analysis circuits are disclosed in U.S. Patent Nos. 7,536,238, 7,971,613, 9,724,840, and also in International Patent Application Publication No. WO 2017/0210091. These conventional electro-mechanical safety mechanisms generally rely upon a conventional sensor assembly, which compares a single voltage signal to ground, or to earth ground, to detect conditions under which the conventional electro-mechanical safety mechanisms should actuate the conventional mechanical reaction mechanism.

While such conventional electro-mechanical safety mechanisms may be effective under certain circumstances, such as when utilized in combination with stationary power tools, plug-in power tools, and/or power tools that include a direct connection to earth ground, they may be ineffective in others. As an example, cordless and/or battery-powered power tools may not include a direct connection to earth ground, which may introduce additional signal noise and/or make it difficult, or impossible, to reliably utilize conventional electro-mechanical safety mechanisms.

As discussed, power tools 10, according to the present disclosure, utilize sensor assemblies 100 that generate differential voltage signal 102. Differential voltage signal 102 may include and/or be a voltage difference between two separate and/or distinct circuits, neither one of which is directly connected to, shorted to, and/or shunted to ground. Stated another way, the differential voltage signal may be a voltage difference between two time-varying voltage signals and/or may not include and/or be a difference between a single voltage and ground, or earth ground. Stated yet another way, differential voltage signal 102 includes a difference between a detected voltage and a reference voltage. As such, sensor assemblies 100, according to the present disclosure, may reliably be included in and/or utilized with cordless power tools 10, with battery-powered power tools 10, and/or with power tools 10 that do not include and/or utilize an electrical connection, a direct electrical connection, and/or a consistent electrical connection to earth ground. Additionally or alternatively, sensor assemblies 100 may be utilized to improve and/or to increase a reliability of power tools 10 that do include and/or utilize the electrical connection to earth ground.

As discussed in more detail herein, power tools 10 may include and/or utilize sensor assemblies 100 that utilize a capacitive coupling with the individual and/or with cutting tool 60. To permit and/or facilitate such a capacitive coupling, power tools 10 may include a cutting tool isolation structure 62. Cutting tool isolation structure 62, when present, may be adapted, configured, designed, and/or constructed to electrically isolate the cutting tool from at least one other component of the power tool, or even from a remainder of the power tool. For example, the cutting tool may be electrically isolated from powered components of the power tool. As another example, cutting tool 60 and an arbor 26 and/or motor shaft 22 to which the cutting tool is coupled may be electrically isolated from the powered components of the power tool, or even from the remaining components of the power tool. Examples of cutting tool isolation structure 62 include an electrically insulating material and/or a dielectric material.

Mechanical reaction mechanism 70 may include any suitable structure that, responsive to receipt of the trigger signal, may be adapted, configured, designed, and/or constructed to insulate, to protect, and/or to separate the individual from cutting tool 60. In addition, mechanical reaction mechanism 70 may insulate, protect, and/or separate the individual from the cutting tool in any suitable manner.

As an example, mechanical reaction mechanism 70 may be configured to cease actuation of the cutting tool responsive to receipt of trigger signal 302. As used herein, actuation of the cutting tool refers to movement, such as rotational movement, vibrational movement, and/or reciprocating movement, of the cutting tool. As a more specific example, mechanical reaction mechanism 70 may include a brake assembly, which may be configured to selectively apply and/or utilize a frictional force to cease actuation of the cutting tool. When present, the brake assembly may be configured to directly engage the cutting tool. Additionally or alternatively, the brake assembly, when present, may be configured to engage arbor 26, motor shaft 22, and/or another component of the power tool that moves in unison with the cutting tool, is actuated with the cutting tool, and/or actuates the cutting tool.

As another example, mechanical reaction mechanism 70 may be configured to selectively cease actuation of the cutting tool by motor 20 responsive to receipt of the trigger signal. As a more specific example, mechanical reaction mechanism 70 may include a decoupling mechanism and/or a clutch that may be configured to disengage motor 20 and/or motor shaft 22 from the cutting tool. As another more specific example, mechanical reaction mechanism 70 may include an electric switch that may be configured to cease supply of electric current to the motor.

As yet another example, mechanical reaction mechanism 70 may be configured to selectively retract the cutting tool into a remainder of the power tool and/or to move the cutting tool away from the individual responsive to receipt of the trigger signal. As a more specific example, mechanical reaction mechanism 70 may include a biasing mechanism, such as a spring, which biases the cutting tool into a recess, or compartment, that may be defined within the power tool, and a release mechanism, which, responsive to receipt of the trigger signal, permits the biasing mechanism to move the cutting tool into the recess, or compartment.

As another example, mechanical reaction mechanism 70 may be configured to selectively sever the cutting tool responsive to receipt of the trigger signal. As a more specific example, mechanical reaction mechanism 70 may include a cutting assembly configured to cut and/or to sever at least a region of the cutting tool, such as to reduce or remove tension in, torque applied, and/or force applied to the cutting tool to actuate the cutting tool.

As yet another example, mechanical reaction mechanism 70 may be configured to selectively position a protective structure between the individual and the cutting tool responsive to receipt of the trigger signal. As a more specific example, mechanical reaction mechanism 70 may include a movable shield or barrier, which may be deployed and/or extended to separate the individual from the cutting tool. As another example, mechanical reaction mechanism 70 may include a wrap material configured to wrap around the cutting tool to separate the individual from the cutting tool.

Motor 20 may include any suitable structure that may provide the motive force for rotation of motor shaft 22, arbor 26, and/or cutting tool 60. Examples of motor 20 include an electric motor, an AC electric motor, a DC electric motor, a variable-speed motor, and/or a single-speed motor.

As discussed in more detail herein, power tool 10 may include and/or be a battery-powered power tool 10 and/or may not include, or may be free of, a connection, or a direct connection, to earth ground. Examples of power tool 10 include a handheld power tool and/or a portable power tool. Additional examples of power tool 10 include a saw, a circular saw, a handheld circular saw, a miter saw, a radial arm saw, a table saw, a chop saw, a plunge saw, a track saw, a bandsaw, a jigsaw, an up cut saw, a panel saw, a rotary cutting tool, a router, a drill, a sander, and/or a planer. Examples of cutting tool 60 include a blade, a saw blade, a circular saw blade, a bit, a router bit, a drill bit, a rotary cutting bit, a sanding pad, a sanding belt, and/or a sanding drum.

Power tools 10 may include one or more structures and/or components that may be common to conventional power tools. As an example, power tools 10 may include arbor 26. Arbor 26 may include any suitable structure that may be operatively attached to motor shaft 22 and/or that may, or that may be utilized to, operatively attach cutting tool 60 to motor shaft 22 such that the motor shaft actuates the cutting tool. In general, arbor 26 may be configured to permit and/or facilitate selective and repeated separation of the cutting tool from a remainder of the power tool, such as to permit and/or facilitate sharpening and/or replacement of the cutting tool. An example of arbor 26 includes a threaded arbor 26.

As illustrated in dashed lines in Fig. 1, power tools 10 may include a gripping region 30. Gripping region 30, when present, also may be referred to herein as, and/or may be, a handle and may be configured to be gripped by a user during use of the power tool.

As also illustrated in dashed lines in Fig. 1, power tools 10 may include a switch 35. Switch 35, when present, may be configured to be selectively actuated by the user of the power tool and/or to selectively apply an electric current to motor 20, such as to power motor 20. Examples of switch 35 include an electrical switch, a normally open electrical switch, a momentary electrical switch, and/or a locking momentary electrical switch.

As also illustrated in dashed lines in Fig. 1, power tools 10 may include a workpiece support 40. Workpiece support 40, when present, may be configured to support workpiece 90 and/or to position the power tool relative to the workpiece when the workpiece is cut or otherwise acted upon by the cutting tool. For example, many power tools 10 in the form of saws include workpiece support 40 in the form of a base plate, a table, a shoe, a rack, or a pad.

Power tools 10 may include any suitable power source, and corresponding power structures, for powering motor 20 and/or sensor assembly 100. Examples of the power structures include a power supply structure 50, such as a power cord 52 and/or a battery 54.

As discussed, sensor assembly 100 is configured to generate differential voltage signal 102. The differential voltage signal is indicative of the distance between the individual and the cutting tool being less than the threshold distance. As also discussed, in embodiments in which detection is based on direct contact between the user and the cutting tool, the threshold distance is or may be zero, whereas in embodiments in which detection is based, at least in part, on proximity between the user and the cutting tool, the threshold distance may be a non-zero value.

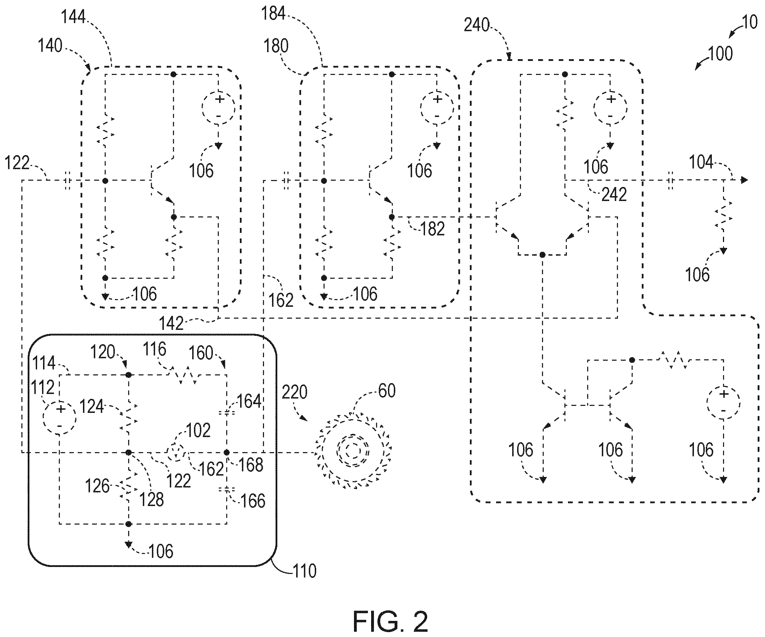

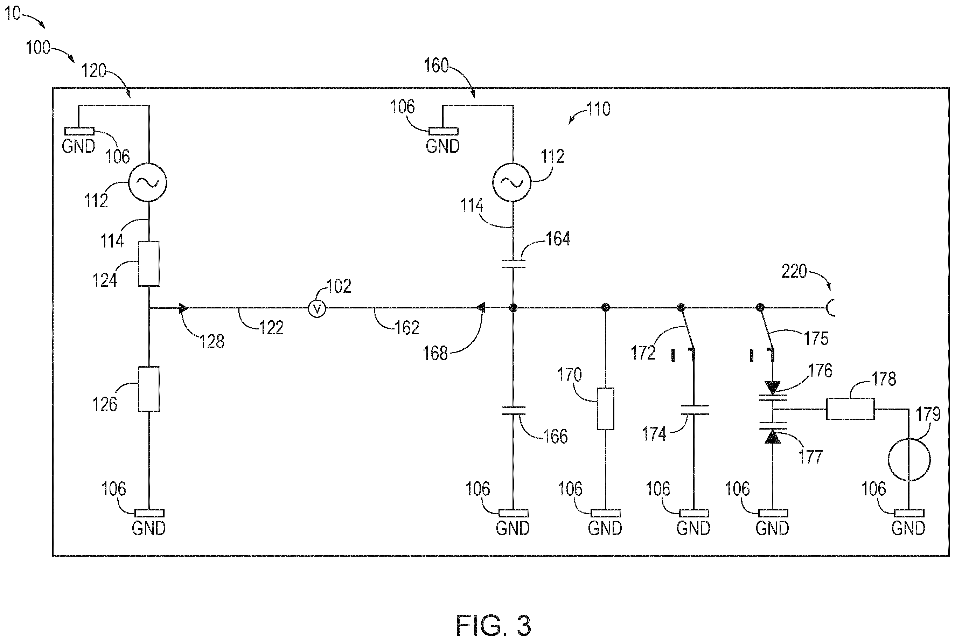

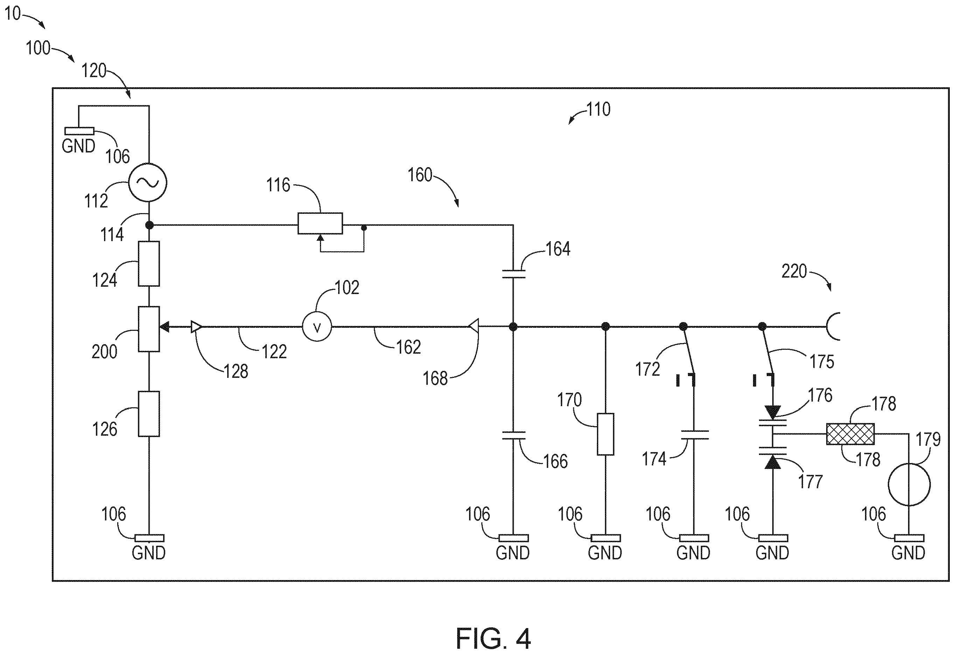

Figs. 2-6 may include and/or be schematic illustrations of examples of sensor assemblies 100, or components of sensor assemblies 100, that is included in and/or utilized with power tools 10, according to the present disclosure. With this in mind, any of the structures, functions, and/or features that are disclosed herein with reference to any sensor assemblies 100 of Figs. 2-6 may be included in and/or utilized with power tools 10 and/or sensor assemblies 100 of Fig. 1 without departing from the scope of the present disclosure. Similarly, any of the structures, functions, and/or features that are disclosed herein with reference to power tools 10 and/or sensor assemblies 100 of Fig. 1 may be included in and/or utilized with sensor assemblies 100 of Figs. 2-6 without departing from the scope of the present disclosure. As an example, and as illustrated in dashed lines in Fig. 1 and in solid lines in Figs. 2-4, sensor assembly 100 includes a bridge circuit 110 that is configured to generate differential voltage signal 102. Figs. 2-4 are schematic illustrations of examples of bridge circuits 110, or components of bridge circuits 110, that may be included in and/or utilized with power tools 10, according to the present disclosure, such as power tools 10 of Fig. 1. With this in mind, any of the structures, functions, and/or features that are disclosed herein with reference to any bridge circuit 110 of any of Figs. 2-4 may be included in, may be utilized with, and/or may replace any other bridge circuit 110 of any other of Figs. 2-4 without departing from the scope of the present disclosure. Stated another way, bridge circuit 110 of Fig. 3 and/or bridge circuit 110 of Fig. 4 may replace, or may be substituted for, bridge circuit 110 of Fig. 2 without departing from the scope of the present disclosure.

As illustrated in Figs. 2-4, bridge circuit 110 includes a reference branch 120 and a detection branch 160. Reference branch 120 is configured to generate a reference branch signal 122 at a reference branch voltage. Similarly, detection branch 160 is configured to generate a detection branch signal 162 at a detection branch voltage. Differential voltage signal 102 is a difference between the reference branch voltage and the detection branch voltage

As also illustrated in Figs. 2-4, sensor assembly 100 and/or bridge circuit 110 thereof may include at least one bridge circuit driver 112, which may be configured to provide a bridge circuit excitation voltage 114 to bridge circuit 110. In some examples, and as illustrated in Figs. 2 and 4, a single bridge circuit driver 112 may be utilized to provide a corresponding bridge circuit excitation voltage 114 to both reference branch 120 and detection branch 160. In some such examples, a variable resistor 116 may be utilized to provide phase compensation between reference branch 120 and detection branch 160. In some examples, and as illustrated in Fig. 3, separate bridge circuit drivers 112 may be utilized to provide corresponding bridge circuit excitation voltages 114 to reference branch 120 and to detection branch 160. In some such examples, a voltage, a current, and/or a phase of the separate bridge circuit drivers 112 may be independently controlled and/or regulated, such as to permit and/or facilitate tuning of the bridge circuit, as discussed in more detail herein. Examples of bridge circuit drivers 112 include an oscillator, a voltage oscillator, and/or an alternating current voltage source.

As illustrated in Figs. 2-4, reference branch 120 may include a first reference branch resistor 124 and a second reference branch resistor 126. First reference branch resistor 124 may electrically interconnect a corresponding bridge circuit driver 112 with a reference branch output terminal 128 of reference branch 120, and second reference branch resistor 126 may electrically interconnect reference branch output terminal 128 with a signal ground 106 of the sensor assembly.

As discussed in more detail herein, power tools 10, according to the present disclosure, may not include, or may not be in direct electrical communication with, an earth ground. With this in mind, signal ground 106 may not be, or may not be equivalent to, the earth ground, may be a floating ground, and/or may be a negative terminal of bridge circuit drivers 112, of a power supply structure for the power tool, and/or of a battery of the power tool, such as battery 54 of Fig. 1.

As illustrated in Fig. 4, reference branch 120 also may include a tuning structure 200. Tuning structure 200, when present, may be configured to be utilized to tune reference branch 120. This may include tuning the reference branch such that a magnitude of the reference branch voltage is within, or set to, a threshold voltage difference of a magnitude of the detection branch voltage and/or such that a phase of the reference branch voltage is within, or set to, a threshold phase difference of a phase of the detection branch voltage. Examples of tuning structure 200 include a potentiometer and/or a variable resistor.

As illustrated in Figs. 2-4, detection branch 160 may include a first detection branch capacitor 164 and a second detection branch capacitor 166. First detection branch capacitor 164 may electrically interconnect a corresponding bridge circuit driver 112 with a detection branch output terminal 168 of detection branch 160, and second detection branch capacitor 166 may electrically interconnect detection branch output terminal 168 with signal ground 106.

With continued reference to Figs. 2-4, detection branch 160 may include a capacitive coupling structure 220. Capacitive coupling structure 220 may be electrically interconnected with detection branch output terminal 168 and may be configured to capacitively couple with and/or to the individual, such that the detection branch voltage is based, at least in part, on the distance between the individual and the cutting tool. Examples of capacitive coupling structure 220 include a galvanic and/or a capacitive coupling with and/or to cutting tool 60.

Turning to the examples illustrated in Figs. 3-4, detection branch 160 additionally may include one or more additional structures, or detection branch output terminal 168 may be electrically connected to one or more additional structures, which may be utilized to decrease noise and/or to improve capacitive coupling to the user. As an example, a detection branch resistor 170 may electrically interconnect detection branch output terminal 168 and signal ground 106. Detection branch resistor 170, when present, may be configured to prevent, or to discharge, electrostatic charging of detection branch 160 and/or of detection branch output terminal 168 thereof.

As another example, a test switch 172 may be utilized to selectively and electrically interconnect detection branch output terminal 168 and signal ground 106 to opposed terminals of a test capacitor 174. In such a configuration, test capacitor 174 may have a capacitance that resembles, mimics, and/or approximates the capacitive coupling between the individual and the cutting tool when the individual is less than the threshold distance from the cutting tool. With this in mind, power tools 10 and/or a user of power tools 10, such as the individual, may selectively close switch 172 to test the operation of sensor assembly 100 and/or to determine whether or not sensor assembly 100 is sensitive to the individual being less than the threshold distance from the cutting tool.

As another example, a calibration switch 175 may be utilized to selectively and electrically interconnect a first varactor diode 176, a second varactor diode 177, an inductor 178 (which additionally may be referred to as a calibration inductor 178), and a variable DC source 179 between detection branch output terminal 168 and signal ground 106. An input to first varactor diode 176 may be configured to receive electric current flow from detection branch output terminal 168, and an output from the first varactor diode may be configured to provide the electric current flow to a node that is electrically connected with an output from second varactor diode 177. An input to second varactor diode 177 may be electrically connected to signal ground 106. Variable DC source 179 may be configured to provide an electric voltage to the node via inductor 178. When calibration switch 175 is closed, variable DC source 179 may be utilized to selectively vary a capacitive load applied to detection branch output terminal 168, such as to permit and/or facilitate calibration of bridge circuit 110 and/or to test a response of bridge circuit 110 to certain and/or specified capacitive loads.

As discussed, Figs. 2-4 illustrate bridge circuits 110 that is included in sensor assemblies 100 and that is utilized to generate differential voltage signals 102, according to the present disclosure. As illustrated in Figs. 2-4, and discussed herein, bridge circuits 110 generate reference branch signal 122 at reference branch output terminal 128 and also generate detection branch signal 162 at detection branch output terminal 168. As illustrated in Fig. 2, reference branch signal 122 and/or detection branch signal 162 may be provided to one or more additional circuits prior to generation of sensor assembly output 104, and Figs. 2 and 5-6 illustrate examples of additional circuits that may receive reference branch signal 122 and/or detection branch signal 162 from the bridge circuit and produce sensor assembly output 104 therefrom.

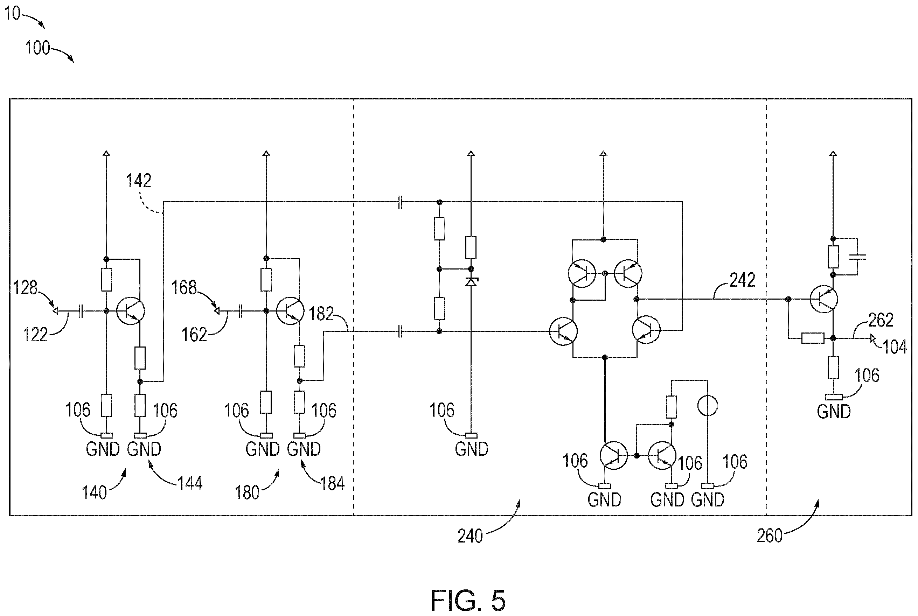

Turning to Figs. 2 and 5, sensor assembly 100 may include a reference branch buffer 140, which may be electrically connected to reference branch output terminal 128. Fig. 2 illustrates reference branch buffer 140 electrically connected to reference branch output terminal 128 of reference branch 120, while Fig. 5 illustrates another example of reference branch buffer 140 that may be electrically connected to the reference branch output terminal and/or that may be substituted for, or may replace, reference branch buffer 140 that is illustrated in Fig. 2.

Reference branch buffer 140, when present, may be configured to buffer reference branch signal 122 to produce and/or generate a buffered reference branch signal 142. In such a configuration, sensor assembly output 104 may be based, at least in part, on buffered reference branch signal 142. Reference branch buffer 140 may be configured to, or may be utilized to, convert a relatively higher output impedance of the bridge circuit 110, which provides reference branch signal 122, to a relatively lower output impedance of the reference branch buffer 140 to produce and/or generate the buffered reference branch signal. The relatively lower output impedance of the reference branch buffer 140 may permit the buffered reference branch signal 142 to function as a loadable voltage source for subsequent circuits that receive the buffered reference branch signal and/or may decrease a magnitude of an electric current of the buffered reference branch signal when compared to reference branch signal 122. An example of reference branch buffer 140 includes a reference branch emitter-follower circuit 144, as illustrated in Figs. 2 and 5.

Turning to Figs. 2 and 5-6, sensor assembly 100 may include a detection branch buffer 180, which may be electrically connected to detection branch output terminal 168. Fig. 2 illustrates detection branch buffer 180 electrically connected to detection branch output terminal 168 of detection branch 160, while Figs. 5-6 illustrate examples of other detection branch buffers 180 that may be electrically connected to the detection branch output terminal and/or that may be substituted for, or may replace, detection branch buffer 180 that is illustrated in Fig. 2.

Detection branch buffer 180, when present, may be configured to buffer detection branch signal 162 to produce and/or generate a buffered detection branch signal 182. In such a configuration, sensor assembly output 104 may be based, at least in part, on buffered detection branch signal 182. Detection branch buffer 180 may be configured to, or may be utilized to, convert a relatively higher output impedance of the bridge circuit 110, which provides detection branch signal 162 to a relatively lower output impedance of the detection branch buffer 180 to produce and/or generate the buffered detection branch signal. The relatively lower output impedance of the detection branch buffer 180 may permit the buffered detection branch signal 162 to function as a loadable voltage source for subsequent circuits that receive the buffered detection branch signal and/or may decrease a magnitude of an electric current of the buffered detection branch signal when compared to detection branch signal 162.

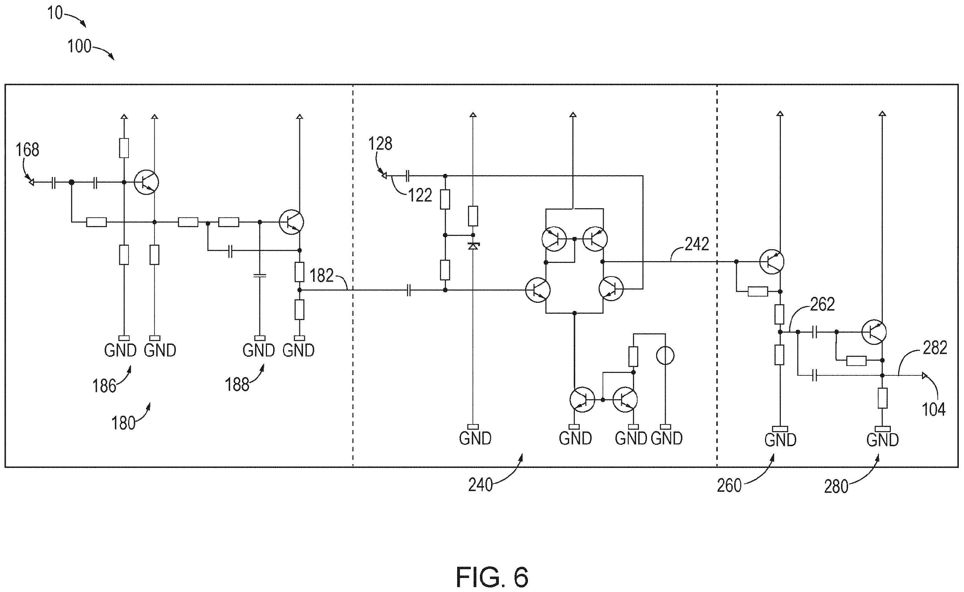

An example of detection branch buffer 180 includes a detection branch emitter-follower circuit 184, as illustrated in Figs. 2 and 5. Another example of detection branch buffer 180 includes, or instead may be, a detection branch high pass filter 186, a detection branch low pass filter 188, and/or detection branch high pass filter 186 in series with detection branch low pass filter 188, as illustrated in Fig. 6. An example of the detection branch high pass filter includes a second order Sallen-Key high pass filter. An example of the detection branch low pass filter includes a second order Sallen-Key low pass filter.

It is within the scope of the present disclosure that reference branch buffer 140 additionally or alternatively may include, or instead may be, a reference branch high pass filter, a reference branch low pass filter, and/or the reference branch high pass filter in series with the reference branch low pass filter. Stated another way, the general structure of detection branch high pass filter 186 and/or detection branch low pass filter 188 may be substituted for, or added to, reference branch buffer 140 that is illustrated in Fig. 2 without departing from the scope of the present disclosure.

With continued reference to Figs. 2 and 5-6, sensor assembly 100 also may include an amplifier circuit 240. Amplifier circuit 240 also may be referred to herein as and/or may be a differential amplifier 240. Amplifier circuit 240, when present, may be configured to amplify differential voltage signal 102, such as via amplification of, or of a differential voltage of, reference branch signal 122, or buffered reference branch signal 142, and detection branch signal 162, or buffered detection branch signal 182. This may include amplification to produce and/or generate an amplified differential voltage signal 242 that is based, at least in part, on the differential voltage signal. When sensor assembly 100 includes amplifier circuit 240, sensor assembly output 104 may be based, at least in part, on the amplified differential voltage signal. The inclusion of amplifier circuit 240 may increase a magnitude of the differential voltage signal 102 and/or increase, or improve, a signal-to-noise ratio of the differential voltage signal, thereby improving detection accuracy.

In some examples, amplifier circuit 240 may be configured to receive, or to directly receive, reference branch signal 122 and/or detection branch signal 162. In some examples, amplifier circuit 240 may be configured to receive buffered reference branch signal 142 and/or buffered detection branch signal 182. Figs. 2 and 5 illustrate examples of sensor assembly 100 in which amplifier circuit 240 receives buffered reference branch signal 142 and buffered detection branch signal 182. Fig. 6 illustrates an example of sensor assembly 100 in which amplifier circuit 240 receives reference branch signal 122 and buffered detection branch signal 182.

Figs. 2 and 5-6 illustrate examples of amplifier circuits 240 that are configured to produce a single amplified differential voltage signal 242. Some examples of sensor assemblies 100 may include and/or utilize amplifier circuits 240 that may be configured to produce and/or generate a pair of outputs that together may define the amplified differential voltage signal (e.g., a voltage difference between the pair of outputs). Examples of such differential amplifiers include a four-arm active bridge circuit and/or a Wheatstone bridge circuit.

In some examples, amplifier circuit 240 may be configured to produce and/or generate amplified differential voltage signal 242 in the form of an amplifier output current, which may be based upon and/or proportional to the differential voltage signal. In some such examples, and as illustrated in Figs. 5-6, sensor assembly 100 may include a converter 260. Converter 260, when present, may be configured to receive the amplifier output current and to generate a converter output voltage 262 therefrom. The converter output voltage may be based, at least in part, on the amplifier output current, and sensor assembly output 104 may be based, at least in part, on the converter output voltage. An example of converter 260 includes a transimpedance converter.

As illustrated in Fig. 6, sensor assembly 100 also may include a filter 280. Filter 280, when present, may be configured to receive converter output voltage 262 and to produce and/or generate a filtered converter output voltage 282, such as to decrease noise within filtered converter output voltage 282 relative to converter output voltage 262 and/or to remove undesired frequency ranges, which are in the converter output voltage, from the filtered converter output voltage. Filtered converter output voltage 282 may be based, at least in part, on the converter output voltage, and sensor assembly output 104 may be based, at least in part, on the filtered converter output voltage. An example of filter 280 includes a second order multiple feedback bandpass filter.

Power tools 10 is configured such that sensor assemblies 100 are calibrated, such as to permit and/or facilitate operation thereof. A method of operating power tools 10 includes blocking, or initially blocking, supply of electric current to the motor assembly and calibrating the sensor assembly. These methods also include permitting supply of electric current to the motor responsive to successful calibration of the sensor assembly. The calibration includes balancing the bridge circuit, such that the differential voltage signal has, or is within a threshold differential voltage of, a predetermined voltage value. In some examples, and as discussed in more detail herein, the calibration may utilize an iterative process in which adjustments are made to the bridge circuit until the differential voltage signal has the predetermined voltage value. Such a configuration may permit and/or facilitate systematic calibration of the bridge circuit and/or may permit the differential voltage signal to be set to the predetermined voltage value without requiring knowledge of the functional behavior of the differential voltage signal.

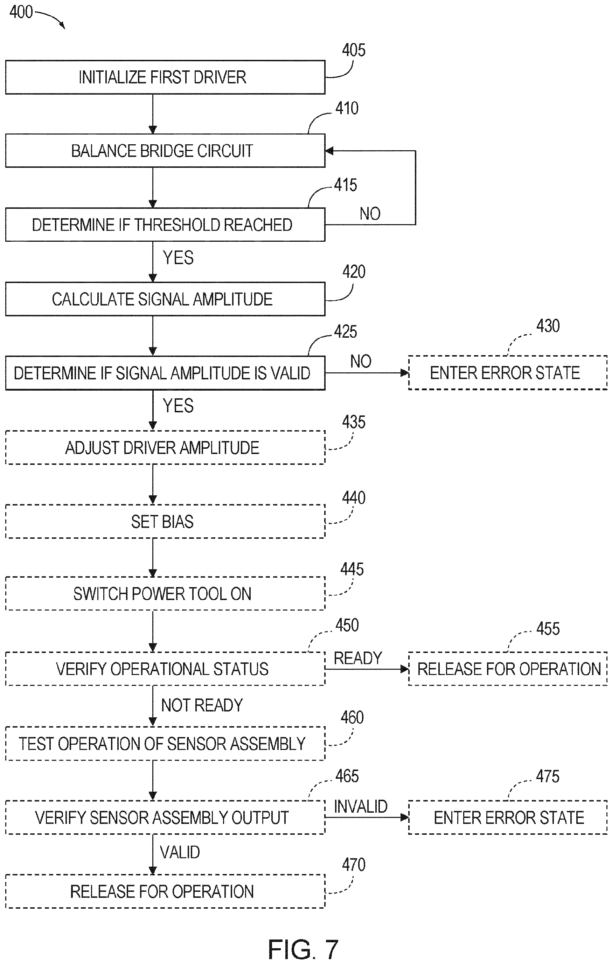

Fig. 7 is a flowchart depicting examples of methods 400 of operating power tools, according to the present disclosure. Methods 400 may include initializing a first bridge circuit driver at 405, such as a first bridge circuit driver 112 of Figs. 2-4, and balancing a bridge circuit at 410, such as bridge circuit 110 of Figs. 2-4. Methods 400 then may include determining, at 415, if the balancing at 410 has been performed a threshold number of times and repeating the balancing at 410 up to the threshold number of times. Subsequently, methods 400 includes calculating a signal amplitude of a signal produced by the cutting tool at 420 and determining, at 425, if the signal amplitude is valid and/or within a predetermined amplitude range. If the signal amplitude is invalid, an error state results, as indicated at 430. If the signal amplitude is valid, methods 400 move to an optional driver amplitude adjustment at 435.

Subsequently, and as indicated at 440, a bias may be set. The bias may include and/or be a specific target, or desired value, or range, for the differential voltage signal generated by the sensor assembly and may be selected based upon any suitable criteria. As an example, the bias may be selected to improve, to increase, and/or to optimize sensitivity of the sensor assembly to the distance between the individual and the cutting tool and/or to the distance being less than the threshold distance. In some examples, the bias may be equal, or at least substantially equal, to zero volts. In other examples, the bias may be non-zero and/or may have a non-zero voltage value. As a more specific example, the bias may be selected such that the sensor assembly has a high sensitivity to changes in capacitance of the capacitive coupling structure.

As indicated at 445, the power tool may be switched on, such as via supply of electric current to motor 20 of Fig. 1. Methods 400 then include verifying, at 450, operational status of the power tool. If the power tool may be released for operation, or for operative use by the user, without further testing, methods 400 may proceed to step 455. Such release at 455 may, for example, be permitted when operation of the sensor assembly recently has been verified. Stated another way, and as discussed in more detail herein, methods 400 may include optional verification of the operation of the sensor assembly, such as to ensure that the sensor assembly is calibrated, to ensure that the sensor assembly is configured to generate the differential voltage signal, and/or to ensure that the differential voltage signal is, in fact, indicative of the distance between the individual and the cutting tool being less than the threshold distance. With this in mind, and in some instances, the verifying at 450 may include permitting the power tool to be released for operation if and/or when the operation of the cutting tool recently has been verified.

If the power tool may not be released without further testing, such as when the operation of the sensor assembly has not recently been verified, methods 400 may proceed to step 460, where operation of the sensor assembly may be tested and/or verified. As an example, a test capacity may be applied in parallel to the cutting tool. Such a test capacity may, for example, be applied via test switch 172 and test capacitor 174 of Figs. 3-4. Such a test capacity may be utilized to test the response of the power tool to a known and/or predefined capacitance (i.e., the test capacity), that mimics, that is similar to, that is within a similar capacitance range as, and/or that is equal to the capacitance experienced by the sensor assembly when the distance between the individual and the cutting tool is less than the threshold distance. A value of the differential voltage signal then may be recorded and sensitivity and/or amplification/gain adjustments may be made, such as by utilizing and/or adjusting amplifier circuit 240 of Figs. 2 and 5-6.

Methods 400 then may include verifying the sensor assembly output from the sensor assembly at 465. If the sensor assembly output is valid, is within a predetermined range, and/or exceeds a threshold value, verification of the sensor assembly may be complete, and methods 400 may release the power tool for operation, as indicated at 470. Alternatively, if the sensor assembly output is invalid, is outside the predetermined range, and/or is less than the threshold value, methods 400 may proceed to an error state, as indicated at 475.

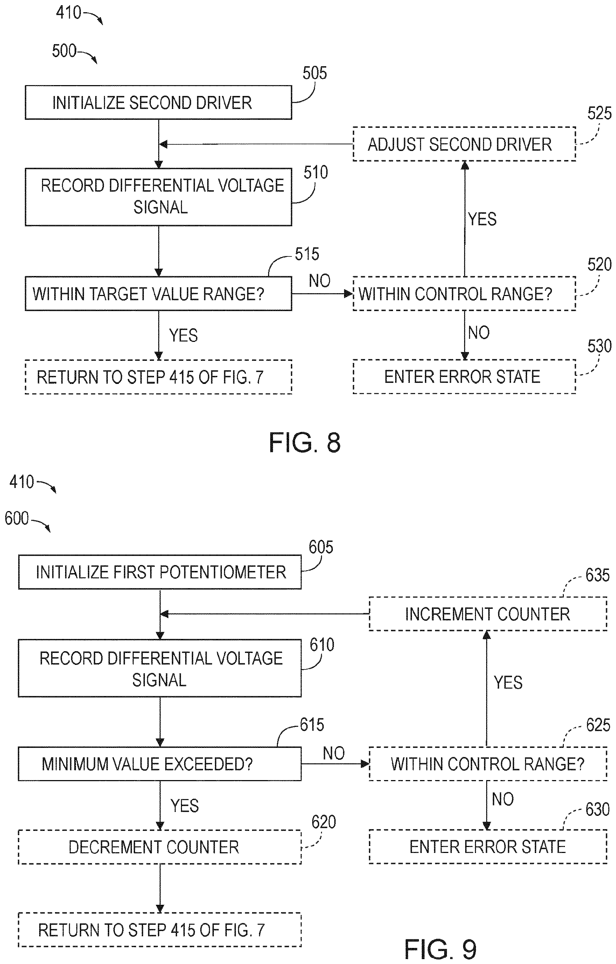

When the sensor assembly includes separate first and second bridge circuit drivers 112, and as illustrated in Fig. 3, methods 500 of Fig. 8 may be utilized to perform the balancing at 410. More specifically the balancing at 410 may include initializing the second bridge circuit driver at 505 and recording a value of the differential voltage signal at 510. If the differential voltage signal is within a target value range, such as at, or near, a minimum value, and as indicated at 515, the balancing at 410 is complete, and methods 400 move to step 415 of Fig. 7. If the target value range of the differential voltage signal has not yet been reached, methods 500 may verify, at 520, that the value of the differential voltage signal is within a predetermined control range. If the value of the differential voltage signal is outside the predetermined control range, methods 500 proceed to error state 530. If the value of the differential voltage signal is within the predetermined control range, methods 500 adjust, or iteratively adjust, the second bridge circuit driver at 525 and return to the recording at 510. The loop of steps 510, 515, 520, and 525 may be repeated until error state 530 is reached or until the target value range for the differential voltage signal is reached, thereby returning to methods 400 of Fig. 7.

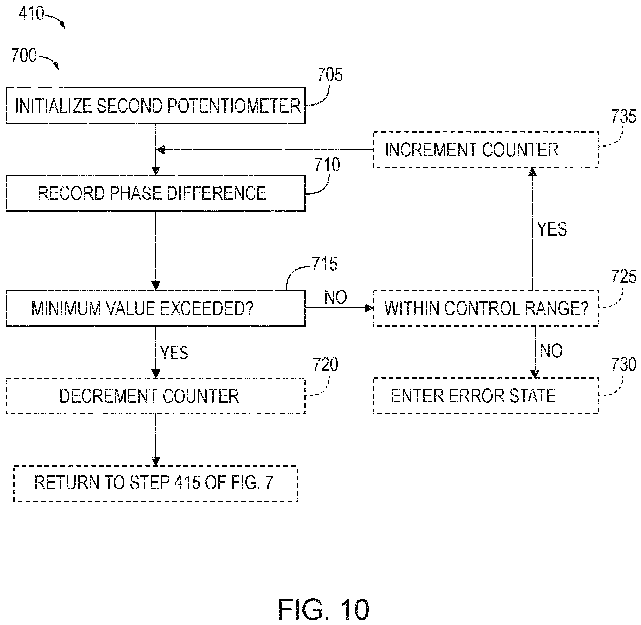

When the sensor assembly includes only a single bridge circuit driver 112, and as illustrated in Figs. 2 and 4, methods 600 of Fig. 9 and/or methods 700 of Fig. 10 may be utilized to perform the balancing at 410. Methods 600 of Fig. 9 may be utilized to balance an amplitude of the reference branch signal and the detection branch signal. Methods 600 may include initializing at 605 a first potentiometer, such as tuning structure 200 of Fig. 4, and recording a value of the differential voltage signal at 610. If a minimum value of the differential voltage signal is exceeded, and as indicated at 615, the balancing at 410 is complete, methods 600 decrement a counter at 620 before returning to step 415 of Fig. 7. If the minimum value of the differential voltage signal is not exceeded, methods 600 proceed to step 625, where the methods determine if the value of the differential voltage signal is within the predetermined control range. If the value of the differential voltage signal is outside the predetermined control range, methods 600 proceed to an error state at 630, in which the methods may notify a user that a desired differential voltage signal was not attained, may indicate to the user that calibration may be needed, and/or may indicate a fault condition to the user. If the value of the differential voltage signal is within the predetermined control range, methods 600 increment the counter at 635 and return to step 610. The loop of steps 610, 615, 625, and 635 may be repeated until error state 630 is reached, until the counter exceeds a predetermined counter value, and/or until the amplitude is balanced, thereby returning to methods 400 of Fig. 7.

Methods 700 of Fig. 10 may be utilized to balance the phase of the reference branch signal and the detection branch signal, and methods 700 may include initializing at 705 a second potentiometer, such as variable resistor 116 of Fig. 4, and recording a phase difference between the reference branch signal and the detection branch signal at 710. If a minimum value of the phase difference is exceeded, and as indicated at 715, the balancing at 410 is complete, methods 700 decrement a counter at 720 before returning to step 415 of Fig. 7. If the minimum value of the phase difference is not exceeded, methods 700 proceed to step 725, where the methods determine if the value of the phase difference is within a predetermined control range. If the value of the phase difference is outside the predetermined control range, methods 700 proceed to an error state at 730. If the value of the phase difference is within the predetermined control range, methods 700 increment the counter at 735 and return to step 710. The loop of steps 710, 715, 725, and 735 may be repeated until error state 730 is reached, until the counter exceeds a predetermined value, and/or until the phase is balanced, thereby returning to methods 400 of Fig. 7.

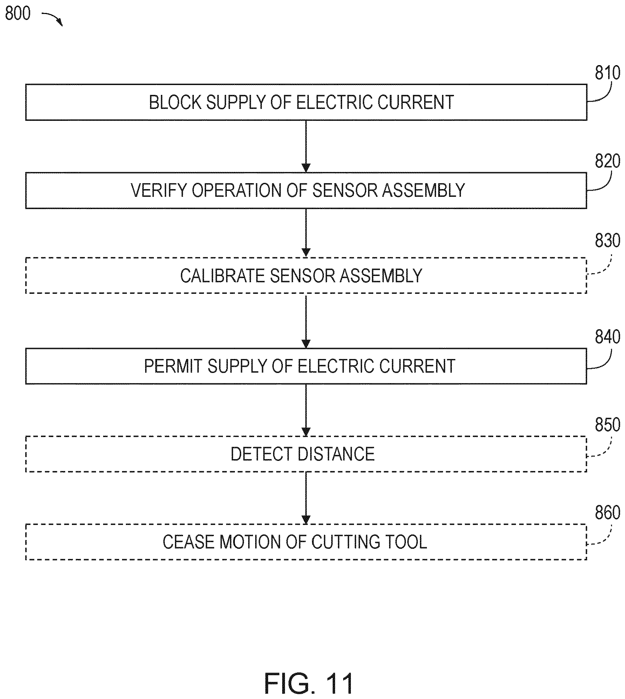

Fig. 11 is a flowchart depicting examples of methods 800 of operating power tools, according to the present disclosure. Examples of such power tools are disclosed herein with reference to power tools 10 of Figs. 1-6. Methods 800 include blocking supply of electric current at 810 and verifying operation of a sensor assembly at 820. Methods 800 also may include calibrating the sensor assembly at 830 and include permitting supply of electric current at 840. Methods 800 further may include detecting a distance at 850 and/or ceasing motion of a cutting tool at 860.

Blocking supply of electric current at 810 may include blocking supply of electric current to a motor of the power tool. This may include blocking the supply of electric current in any suitable manner and/or utilizing any suitable structure, examples of which include a switch, a solid state switch, a transistor, a relay, and/or a controller, which may be adapted, configured, designed, constructed, and/or programmed to selectively permit and/or to selectively restrict supply of electric current to the motor of the power tool even if the user actuates a switch and/or otherwise instructs the power tool to provide the electric current to the motor.

The power tool includes a sensor assembly, which is configured to detect when a distance between an individual and a cutting tool of the power tool is less than a threshold distance. With this in mind, verifying operation of the sensor assembly at 820 may include verifying that the sensor assembly is, is indeed, or currently is adapted, configured, programmed, and/or able to detect when and/or that the distance between the individual and the cutting tool is less than the threshold distance.

Calibrating the sensor assembly at 830 may include calibrating the sensor assembly in any suitable manner, such as to enable the sensor assembly to detect when and/or that the distance between the individual and the cutting tool is less than the threshold distance. In some examples, the calibrating at 830 may be, or may be performed, responsive to the verifying at 820 indicating that the sensor assembly is not, is not currently, or is not presently adapted, configured, programmed, and/or able to detect when and/or that the distance between the individual and the cutting tool is less than the threshold distance.

The sensor assembly includes a bridge circuit, such as bridge circuit 110 that is discussed herein. The calibration at 830 includes balancing the bridge circuit. The balancing includes balancing a reference branch voltage of a reference branch of the bridge circuit and a detection branch voltage of a detection branch of the bridge circuit. In some examples, the balancing may include balancing a reference branch phase of the reference branch and a detection branch phase of the detection branch.

In some examples, the calibrating may include setting a differential voltage signal, of the sensor assembly, to a target range. In some such examples, the target range may include 0 volts. In some such examples, the target range may exclude 0 volts, such as to increase a sensitivity of the sensor assembly to the distance between the individual and the cutting tool, as discussed in more detail herein.

Permitting supply of electric current at 840 includes permitting supply of electric current, to the motor of the power tool, responsive to successful verification of operation of the sensor assembly. This may include permitting supply of electric current while the power tool is free of a direct connection to earth ground. Stated another way, and as discussed in more detail herein, methods 800 may be performed utilizing a cordless, or battery-powered power tool that does not include and/or utilize a connection, a direct connection, and/or a wired connection to earth ground.

Detecting a distance at 850 may include detecting that the distance between the individual and the cutting tool is less than the threshold distance. In some examples, the detecting at 850 may include capacitively detecting, such as via a capacitive coupling structure of the power tool. Examples of the capacitive coupling structure are disclosed herein with reference to capacitive coupling structure 220. In some examples, the detecting at 850 may be performed subsequent to the permitting at 840 and/or may be responsive to the distance between the individual and the cutting tool being less than the threshold distance. In some examples, the detecting at 850 may include generating the differential voltage signal, which may be indicative of the distance between the individual and the cutting tool, and/or which may be indicative that the distance between the individual and the cutting tool is less than the threshold distance.

Ceasing motion of a cutting tool at 860 may include ceasing any suitable rotations, reciprocal, vibrational, and/or linear motion of the cutting tool, such as to protect the individual from injury, which may be caused by contact between the individual and a moving cutting tool. In some examples, the ceasing at 860 may be responsive to the detecting at 850. In some examples, the ceasing at 860 may be performed with, via, and/or utilizing a mechanical reaction mechanism of the power tool. Examples of the mechanical reaction mechanism are disclosed herein with reference to mechanical reaction mechanism 70.

In the present disclosure, several of the illustrative, non-exclusive examples have been discussed and/or presented in the context of flow diagrams, or flow charts, in which the methods are shown and described as a series of blocks, or steps. Unless specifically set forth in the accompanying description, it is within the scope of the present disclosure that the order of the blocks may vary from the illustrated order in the flow diagram, including with two or more of the blocks (or steps) occurring in a different order and/or concurrently. It is also within the scope of the present disclosure that the blocks, or steps, may be implemented as logic, which also may be described as implementing the blocks, or steps, as logics. In some applications, the blocks, or steps, may represent expressions and/or actions to be performed by functionally equivalent circuits or other logic devices. The illustrated blocks may, but are not required to, represent executable instructions that cause a computer, processor, and/or other logic device to respond, to perform an action, to change states, to generate an output or display, and/or to make decisions.

As used herein, the term "and/or" placed between a first entity and a second entity means one of (1) the first entity, (2) the second entity, and (3) the first entity and the second entity. Multiple entities listed with "and/or" should be construed in the same manner, i.e., "one or more" of the entities so conjoined. Other entities may optionally be present other than the entities specifically identified by the "and/or" clause, whether related or unrelated to those entities specifically identified. Thus, as a non-limiting example, a reference to "A and/or B," when used in conjunction with open-ended language such as "comprising" may refer, in one embodiment, to A only (optionally including entities other than B); in another embodiment, to B only (optionally including entities other than A); in yet another embodiment, to both A and B (optionally including other entities). These entities may refer to elements, actions, structures, steps, operations, values, and the like.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one embodiment, to at least one, optionally including more than one, A, with no B present (and optionally including entities other than B); in another embodiment, to at least one, optionally including more than one, B, with no A present (and optionally including entities other than A); in yet another embodiment, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

In the event that any patents, patent applications, or other references are incorporated by reference herein and (1) define a term in a manner that is inconsistent with and/or (2) are otherwise inconsistent with, either the non-incorporated portion of the present disclosure or any of the other incorporated references, the non-incorporated portion of the present disclosure shall control, and the term or incorporated disclosure therein shall only control with respect to the reference in which the term is defined and/or the incorporated disclosure was present originally.

As used herein the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar and/or equivalent components, features, details, structures, embodiments, and/or methods, are also within the scope of the present disclosure.

As used herein, "at least substantially," when modifying a degree or relationship, may include not only the recited "substantial" degree or relationship, but also the full extent of the recited degree or relationship. A substantial amount of a recited degree or relationship may include at least 75% of the recited degree or relationship. For example, an object that is at least substantially formed from a material includes objects for which at least 75% of the objects are formed from the material and also includes objects that are completely formed from the material. As another example, a first length that is at least substantially as long as a second length includes first lengths that are within 75% of the second length and also includes first lengths that are as long as the second length.

### Industrial Applicability

The power tools and methods disclosed herein are applicable to the power tool industry.

## Claims

1. A power tool (10) comprising:
a motor (20) including a motor shaft (22) configured to rotate about a shaft rotational axis (24), wherein the motor (20) is configured to actuate a cutting tool (60) to cut a workpiece;
a sensor assembly (100) configured to generate a differential voltage signal (102) that is indicative of a distance between an individual and the cutting tool (60) being less than a threshold distance and to produce a sensor assembly output (104) that is based upon the differential voltage signal (102);
an analysis circuit (300) configured to receive the sensor assembly output (104) and to generate a trigger signal (302) responsive to the sensor assembly output (104) being outside a nominal sensor assembly output range; and
a mechanical reaction mechanism (70) configured to insulate the individual from the cutting tool (60) responsive to receipt of the trigger signal (302), **characterised in that** the sensor assembly (100) includes a bridge circuit (110) configured to generate the differential voltage signal (102), wherein the bridge circuit (110) includes a reference branch (120), which is configured to generate a reference branch signal (122) at a reference branch voltage, and a detection branch (160), which is configured to generate a detection branch signal (162) at a detection branch voltage, and further wherein the differential voltage signal (102) includes a difference between the reference branch voltage and the detection branch voltage.

2. The power tool (10) of claim 1, wherein the bridge circuit (110) includes a bridge circuit oscillator configured to provide a bridge circuit excitation voltage to the reference branch (120) and also to the detection branch (160), and/or wherein the bridge circuit (110) includes a reference branch oscillator configured to provide a reference branch excitation voltage to the reference branch (120) and a detection branch oscillator configured to provide a detection branch excitation voltage to the detection branch (160).

3. The power tool (10) of any of claims 1-2, wherein the reference branch (120) includes a tuning structure (200) configured to be utilized to tune the reference branch (120) such that at least one of:
(i) a magnitude of the reference branch voltage is within a threshold voltage difference of a magnitude of the detection branch voltage; and
(ii) a phase of the reference branch voltage is within a threshold phase difference of a phase of the detection branch voltage, and/or wherein the detection branch (160) includes a capacitive coupling structure (220) configured to capacitively couple to the individual such that the detection branch voltage is based, at least in part, on the distance between the individual and the cutting tool (60),
and/or wherein the sensor assembly (100) further includes a reference branch buffer (140) configured to buffer the reference branch signal (122) to produce a buffered reference branch signal (142), the sensor assembly output (104) being based, at least in part, on the buffered reference branch signal (142),
and/or wherein the sensor assembly (100) further includes a detection branch buffer (180) configured to buffer the detection branch signal (162) to produce a buffered detection branch signal (162), the sensor assembly output (104) being based, at least in part, on the buffered detection branch signal (162).

4. The power tool (10) of any of claims 1-3, wherein the sensor assembly (100) further includes an amplifier circuit (240) configured to amplify the differential voltage signal (102) to produce an amplified differential voltage signal (242), wherein the sensor assembly output (104) is based, at least in part, on the amplified differential voltage signal (242).

5. The power tool (10) of claim 4, wherein the amplifier circuit (240) is configured to generate an amplifier output current, and further wherein the sensor assembly (100) includes a converter (260) configured to receive the amplifier output current and to generate a converter output voltage, wherein the converter output voltage is based, at least in part, on the amplifier output current, and further wherein the sensor assembly output (104) is based, at least in part, on the converter output voltage, wherein preferably the amplifier circuit (240) further includes a filter configured to receive the converter output voltage and to generate a filtered converter output voltage,
wherein preferably the filtered converter output voltage is based, at least in part, on the converter output voltage, and further preferably wherein the sensor assembly output (104) is based, at least in part, on the filtered converter output voltage.

6. The power tool (10) of any of claims 1-5, wherein the power tool (10) further includes a cutting tool isolation structure (62) configured to electrically isolate the cutting tool (60) from at least one other component of the power tool (10).

7. The power tool (10) of any of claims 1-6, wherein the mechanical reaction mechanism (70) is configured to at least one of:
(i) selectively cease actuation of the cutting tool (60) responsive to receipt of the trigger signal (302);
(ii) selectively cease actuation of the cutting tool (60) by the motor (20) responsive to receipt of the trigger signal (302);
(iii) selectively retract the cutting tool (60) into the power tool (10) responsive to receipt of the trigger signal (302);
(iv) selectively sever the cutting tool (60) responsive to receipt of the trigger signal (302); and
(v) selectively position a protective structure between the individual and the cutting tool (60) responsive to receipt of the trigger signal (302).

8. The power tool (10) of any of claims 1-7, wherein the power tool (10) is a battery-powered power tool, and/or wherein the power tool (10) is free of a direct connection to earth ground,
and/or wherein the power tool (10) includes at least one of:
(i) a saw;
(ii) a circular saw;
(iii) a handheld circular saw;
(iv) a miter saw;
(v) a radial arm saw;
(vi) a table saw;
(vii) a chop saw;
(viii) a plunge saw;
(ix) a track saw;
(x) a bandsaw;
(xi) a jigsaw;
(xii) an up cut saw;
(xiii) a panel saw;
(xiv) a rotary cutting tool;
(xv) a router;
(xvi) a drill; and
(xvii) a planer, and/or wherein the power tool (10) includes at least one of:
(i) a handheld power tool; and
(ii) a portable power tool, and/or wherein the cutting tool (60) includes at least one of:
(i) a blade;
(ii) a saw blade;
(iii) a circular saw blade;
(iv) a bit;
(v) a router bit;
(vi) a drill bit; and
(vii) a rotary cutting bit.

9. A method of operating a power tool (10), the method comprising:
blocking supply of electric current to a motor (20) of the power tool (10);
verifying operation of a sensor assembly (100) of the power tool (10), wherein the sensor assembly (100) is configured to generate a differential voltage signal (102) that is indicative of a distance between an individual and a cutting tool (60) of the power tool (10) being less than a threshold distance; and
permitting supply of electric current to the motor (20) responsive to successful verification of operation of the sensor assembly (100), wherein the method further includes calibrating the sensor assembly (100), wherein the sensor assembly (100) includes a bridge circuit (110), and further wherein the calibrating includes balancing the bridge circuit (110, and wherein the balancing the bridge circuit (110) includes balancing a reference branch voltage of a reference branch of the bridge circuit (110) and a detection branch voltage of a detection branch (160) of the bridge circuit (110).

10. The method of claim 9, wherein the balancing the bridge circuit (110) includes balancing a reference branch phase of the reference branch (120) of the bridge circuit (110) and a detection branch phase of the detection branch (160) of the bridge circuit (110).

11. The method of any of claims 9-10, wherein the calibrating includes setting the differential voltage signal (102) to a target range, wherein the target range preferably includes 0 volts, or wherein the target range preferably excludes 0 volts.

12. The method of any of claims 9-11, wherein the calibrating is responsive to the verifying indicating that the sensor assembly (100) is not configured to detect when the distance between the individual and the cutting tool (60) is less than the threshold distance.

13. The method of any of claims 9-12, where, subsequent to the permitting, the method further includes detecting that the distance between the individual and the cutting tool (60) is less than the threshold distance, wherein the verifying preferably includes verifying that the sensor assembly (100) is configured to detect that the distance between the individual and the cutting tool (60) is less than the threshold distance.

14. The method of any of claims 9-13, wherein the detecting includes capacitively detecting utilizing a capacitive coupling structure (220) of the power tool (10),
and/or wherein the detecting further includes generating the differential voltage signal (102) that is indicative of the distance between the individual and the cutting tool (60) being less than the threshold distance,
and/or wherein, responsive to the detecting, the method further includes ceasing motion of the cutting tool (60).

15. The method of any of claims 9-14, wherein the permitting supply of electric current includes permitting supply of electric current while the power tool (10) is free of a direct connection to earth ground.

## Patentansprüche

1. Angetriebenes Werkzeug (10) umfassend:
einen Motor (20) mit einer Motorwelle (22), die dazu ausgebildet ist, um eine Wellenrotationsachse (24) zu rotieren, wobei der Motor (20) dazu ausgebildet ist, ein Schneidwerkzeug (60) zum Schneiden eines Werkstücks anzutreiben;
eine Sensorbaugruppe (100), die dazu ausgebildet ist, ein Differenzspannungssignal (102) zu erzeugen, das einen Abstand zwischen einer Person und dem Schneidwerkzeug (60) kennzeichnet, der kleiner als ein Schwellenabstand ist, und eine Sensorbaugruppen-Ausgabe (104) zu erzeugen, die auf dem Differenzspannungssignal (102) basiert;
eine Analyseschaltung (300), die dazu ausgebildet ist, die Sensorbaugruppen-Ausgabe (104) zu empfangen und in Reaktion auf eine außerhalb eines nominellen Sensorbaugruppen-Ausgabebereichs liegende Sensorbaugruppen-Ausgabe (104) ein Triggersignal (302) zu erzeugen; und
einen mechanischen Reaktionsmechanismus (70), der dazu ausgebildet ist, die Person in Reaktion auf den Empfang des Triggersignals (302) von dem Schneidwerkzeug (60) zu isolieren,
**dadurch gekennzeichnet,**
**dass** die Sensorbaugruppe (100) eine Brückenschaltung (110) umfasst, die dazu ausgebildet ist, das Differenzspannungssignal (102) zu erzeugen, wobei die Brückenschaltung (110) einen Referenzzweig (120) umfasst, der dazu ausgebildet ist, ein Referenzzweigsignal (122) mit einer Referenzzweigspannung zu erzeugen, und einen Detektionszweig (160), der dazu ausgebildet ist, ein Detektionszweigsignal (162) mit einer Detektionszweigspannung zu erzeugen, und wobei ferner das Differenzspannungssignal (102) eine Differenz zwischen der Referenzzweigspannung und der Detektionszweigspannung umfasst.

2. Angetriebenes Werkzeug (10) nach Anspruch 1, wobei die Brückenschaltung (110) einen Brückenschaltungs-Oszillator umfasst, der dazu ausgebildet ist, eine Brückenschaltungs-Erregungsspannung an den Referenzzweig (120) und auch an den Detektionszweig (160) zu liefern, und/oder wobei die Brückenschaltung (110) einen Referenzzweig-Oszillator umfasst, der dazu ausgebildet ist, eine Referenzzweig-Erregungsspannung an den Referenzzweig (120) zu liefern, und einen Detektionszweig-Oszillator, der dazu ausgebildet ist, eine Detektionszweig-Erregungsspannung an den Detektionszweig (160) zu liefern.

3. Angetriebenes Werkzeug (10) nach einem der Ansprüche 1 bis 2, wobei der Referenzzweig (120) eine Abstimmstruktur (200) aufweist, die dazu ausgebildet ist, den Referenzzweig (120) so abzustimmen, dass mindestens eines von Folgendem erreicht wird:
(i) eine Größe der Spannung des Referenzzweigs liegt innerhalb einer Schwellenspannungsdifferenz zu einem Betrag der Spannung des Detektionszweigs; und
(ii) eine Phase der Referenzzweigspannung liegt innerhalb einer Schwellenphasendifferenz einer Phase der Detektionszweigspannung, und/oder wobei der Detektionszweig (160) eine kapazitive Kopplungsstruktur (220) umfasst, die dazu ausgebildet ist, kapazitiv an die Person anzukoppeln, so dass die Detektionszweigspannung zumindest teilweise auf dem Abstand zwischen der Person und dem Schneidwerkzeug (60) basiert,
und/oder wobei die Sensorbaugruppe (100) ferner einen Referenzzweigpuffer (140) aufweist, der dazu ausgebildet ist, das Referenzzweigsignal (122) zu puffern, um ein gepuffertes Referenzzweigsignal (142) zu erzeugen, wobei die Sensorbaugruppen-Ausgabe (104) zumindest teilweise auf dem gepufferten Referenzzweigsignal (142) basiert,
und/oder wobei die Sensorbaugruppe (100) ferner einen Detektionszweigpuffer (180) aufweist, der dazu ausgebildet ist, das Detektionszweigsignal (162) zu puffern, um ein gepuffertes Detektionszweigsignal (162) zu erzeugen, wobei die Sensorbaugruppen-Ausgabe (104) zumindest teilweise auf dem gepufferten Detektionszweigsignal (162) basiert.

4. Angetriebenes Werkzeug (10) nach einem der Ansprüche 1 bis 3, wobei die Sensorbaugruppe (100) ferner eine Verstärkerschaltung (240) umfasst, die dazu ausgebildet ist, das Differenzspannungssignal (102) zu verstärken, um ein verstärktes Differenzspannungssignal (242) zu erzeugen, wobei die Sensorbaugruppen-Ausgabe (104) zumindest teilweise auf dem verstärkten Differenzspannungssignal (242) basiert.

5. Angetriebenes Werkzeug (10) nach Anspruch 4, wobei die Verstärkerschaltung (240) dazu ausgebildet ist, einen Verstärkerausgangsstrom zu erzeugen, und wobei ferner die Sensorbaugruppe (100) einen Wandler (260) aufweist, der dazu ausgebildet ist, den Verstärkerausgangsstrom zu empfangen und eine Wandlerausgangsspannung zu erzeugen, wobei die Wandlerausgangsspannung zumindest teilweise auf dem Verstärkerausgangsstrom basiert, und wobei ferner die Sensorbaugruppen-Ausgabe (104) zumindest teilweise auf der Wandlerausgangsspannung basiert, wobei vorzugsweise die Verstärkerschaltung (240) ferner einen Filter aufweist, der dazu ausgebildet ist, die Wandlerausgangsspannung zu empfangen und eine gefilterte Wandlerausgangsspannung zu erzeugen,
wobei vorzugsweise die gefilterte Wandlerausgangsspannung zumindest teilweise auf der Wandlerausgangsspannung basiert, und wobei weiter vorzugsweise die Sensorbaugruppen-Ausgabe (104) zumindest teilweise auf der gefilterten Wandlerausgangsspannung basiert.

6. Angetriebenes Werkzeug (10) nach einem der Ansprüche 1 bis 5, wobei das angetriebene Werkzeug (10) ferner eine Schneidwerkzeug-Isolationsstruktur (62) aufweist, die dazu ausgebildet ist, das Schneidwerkzeug (60) von mindestens einer anderen Komponente des angetriebenen Werkzeugs (10) elektrisch zu isolieren.

7. Angetriebenes Werkzeug (10) nach einem der Ansprüche 1 bis 6, wobei der mechanische Reaktionsmechanismus (70) dazu ausgebildet ist, mindestens einen der folgenden Schritte auszuführen:
(i) selektives Beenden des Antreibens des Schneidwerkzeugs (60) als Reaktion auf den Empfang des Triggersignals (302);
(ii) selektives Beenden des Antreibens des Schneidwerkzeugs (60) durch den Motor (20) als Reaktion auf den Empfang des Triggersignals (302);
(iii) selektives Zurückziehen des Schneidwerkzeugs (60) in das angetriebene Werkzeug (10) als Reaktion auf den Empfang des Triggersignals (302);
(iv) selektives Abtrennen des Schneidwerkzeugs (60) als Reaktion auf den Empfang des Triggersignals (302); und
(v) selektives Positionieren einer Schutzstruktur zwischen der Person und dem Schneidwerkzeug (60) als Reaktion auf den Empfang des Triggersignals (302).

8. Das angetriebene Werkzeug (10) nach einem der Ansprüche 1 bis 7, wobei das angetriebene Werkzeug (10) ein batteriebetriebenes Werkzeug ist, und/oder wobei das angetriebene Werkzeug (10) keine direkte Verbindung zur Erde hat,
und/oder wobei das angetriebene Werkzeug (10) mindestens eines der Folgenden umfasst:
(i) eine Säge;
(ii) eine Kreissäge;
(iii) eine handgeführte Kreissäge;
(iv) eine Gehrungssäge;
(v) eine Radialarmsäge
(vi) eine Tischsäge;
(vii) eine Kappsäge
(viii) eine Tauchsäge
(ix) eine Schienensäge;
(x) eine Bandsäge;
(xi) eine Stichsäge;
(xii) eine Aufwärtsschnittsäge;
(xiii) eine Plattensäge;
(xiv) ein rotierendes Schneidwerkzeug;
(xv) eine Oberfräse;
(xvi) eine Bohrmaschine; und
(xvii) eine Hobelmaschine,
und/oder wobei das angetriebene Werkzeug (10) mindestens eines der Folgenden umfasst:
(xviii) ein handgehaltenes angetriebenes Werkzeug; und
(xix) ein tragbares angetriebenes Werkzeug, und/oder wobei das Schneidwerkzeug (60) mindestens eines der Folgenden umfasst:
(i) eine Klinge;
(ii) ein Sägeblatt;
(iii) ein Kreissägeblatt;
(iv) ein Bit;
(v) eine Oberfräserspitze;
(vi) eine Bohrerspitze; und
(vii) ein rotierendes Schneidstück.

9. Verfahren zum Betreiben eines angetriebenen Werkzeugs (10), wobei das Verfahren umfasst:
Sperren der Zufuhr von elektrischem Strom zu einem Motor (20) des angetriebenen Werkzeugs (10);
Verifizieren des Betriebs einer Sensorbaugruppe (100) des angetriebenen Werkzeugs (10), wobei die Sensorbaugruppe (100) dazu ausgebildet ist, ein Differenzspannungssignal (102) zu erzeugen, das einen Abstand zwischen einer Person und einem Schneidwerkzeug (60) des angetriebenen Werkzeugs (10) kennzeichnet, der geringer ist als ein Schwellenabstand; und
Zulassen der Zufuhr von elektrischem Strom zum Motor (20) in Reaktion auf eine erfolgreiche Verifizierung des Betriebs der Sensorbaugruppe (100), wobei das Verfahren ferner das Kalibrieren der Sensorbaugruppe (100) umfasst, wobei die Sensorbaugruppe (100) eine Brückenschaltung (110) umfasst, und wobei ferner das Kalibrieren das Abgleichen der Brückenschaltung (110) umfasst, und wobei das Abgleichen der Brückenschaltung (110) das Abgleichen einer Referenzzweigspannung eines Referenzzweigs der Brückenschaltung (110) und einer Detektionszweigspannung eines Detektionszweigs (160) der Brückenschaltung (110) umfasst.

10. Verfahren nach Anspruch 9, wobei das Abgleichen der Brückenschaltung (110) das Abgleichen einer Referenzzweigphase des Referenzzweigs (120) der Brückenschaltung (110) und einer Detektionszweigphase des Detektionszweigs (160) der Brückenschaltung (110) umfasst.

11. Verfahren nach einem der Ansprüche 9-10, wobei das Kalibrieren das Einstellen des Differenzspannungssignals (102) auf einen Zielbereich umfasst, wobei der Zielbereich vorzugsweise 0 Volt einschließt, oder wobei der Zielbereich vorzugsweise 0 Volt ausschließt.

12. Verfahren nach einem der Ansprüche 9 bis 11, wobei das Kalibrieren darauf reagiert, dass die Verifizierung anzeigt, dass die Sensorbaugruppe (100) nicht dazu konfiguriert ist, zu erkennen, wenn der Abstand zwischen der Person und dem Schneidwerkzeug (60) geringer als der Schwellenabstand ist.

13. Verfahren nach einem der Ansprüche 9 bis 12, wobei das Verfahren im Anschluss an das Zulassen ferner das Erfassen des Umstands umfasst, dass der Abstand zwischen der Person und dem Schneidwerkzeug (60) geringer als der Schwellenabstand ist, wobei das Verifizieren vorzugsweise das Verifizieren des Umstands umfasst, dass die Sensorbaugruppe (100) dazu konfiguriert ist, zu erfassen, dass der Abstand zwischen der Person und dem Schneidwerkzeug (60) geringer als der Schwellenabstand ist.

14. Verfahren nach einem der Ansprüche 9-13, wobei die Erfassung eine kapazitive Erfassung unter Verwendung einer kapazitiven Kopplungsstruktur (220) des angetriebenen Werkzeugs (10) umfasst,
und/oder wobei das Erfassen ferner das Erzeugen des Differenzspannungssignals (102) umfasst, das kennzeichnet, dass der Abstand zwischen der Person und dem Schneidwerkzeug (60) geringer als der Schwellenabstand ist,
und/oder wobei das Verfahren in Reaktion auf das Erfassen ferner das Beenden der Bewegung des Schneidwerkzeugs (60) umfasst.

15. Verfahren nach einem der Ansprüche 9 bis 14, wobei das Zulassen der Zufuhr von elektrischem Strom das Zulassen der Zufuhr von elektrischem Strom umfasst, während das angetriebene Werkzeug (10) keine direkte Verbindung zur Erde hat.

## Revendications

1. outil motorisé (10) comprenant :
un moteur (20) comprenant un arbre moteur (22) configuré pour tourner autour d'un axe de rotation de l'arbre (24), le moteur (20) étant configuré pour actionner un outil de coupe (60) afin de couper une pièce ;
un ensemble de capteurs (100) configuré pour générer un signal de tension différentielle (102) qui indique que la distance entre un individu et l'outil de coupe (60) est inférieure à une distance seuil et pour produire une sortie de l'ensemble de capteurs (104) qui est basée sur le signal de tension différentielle (102) ;
un circuit d'analyse (300) configuré pour recevoir la sortie de l'ensemble de capteurs (104) et pour générer un signal de déclenchement (302) en réponse à la sortie de l'ensemble de capteurs (104) qui est en dehors d'une plage de sortie nominale de l'ensemble de capteurs ; et
un mécanisme de réaction mécanique (70) configuré pour isoler l'individu de l'outil de coupe (60) en réponse à la réception du signal de déclenchement (302),
**caractérisé**
**en ce que** l'ensemble capteur (100) comprend un circuit de pont (110) configuré pour générer le signal de tension différentielle (102), dans lequel le circuit de pont (110) comprend une branche de référence (120), qui est configurée pour générer un signal de branche de référence (122) à une tension de branche de référence, et une branche de détection (160), qui est configurée pour générer un signal de branche de détection (162) à une tension de branche de détection, et en outre dans lequel le signal de tension différentielle (102) comprend une différence entre la tension de branche de référence et la tension de branche de détection.

2. L'outil motorisé (10) de la revendication 1, dans lequel le circuit de pont (110) comprend un oscillateur de circuit de pont configuré pour fournir une tension d'excitation de circuit de pont à la branche de référence (120) et également à la branche de détection (160), et/ou dans lequel le circuit de pont (110) comprend un oscillateur de branche de référence configuré pour fournir une tension d'excitation de branche de référence à la branche de référence (120) et un oscillateur de branche de détection configuré pour fournir une tension d'excitation de branche de détection à la branche de détection (160).

3. L'outil motorisé (10) de l'une des revendications 1-2, dans lequel la branche de référence (120) comprend une structure d'accord (200) configurée pour être utilisée pour accorder la branche de référence (120) de sorte qu'au moins l'un de :
(i) une magnitude de la tension de la branche de référence se situe dans une différence de tension seuil par rapport à une magnitude de la tension de la branche de détection ; et
(ii) une phase de la tension de la branche de référence se trouve dans une différence de phase seuil d'une phase de la tension de la branche de détection, et/ou dans lequel la branche de détection (160) comprend une structure de couplage capacitif (220) configurée pour se coupler capacitivement à l'individu de sorte que la tension de la branche de détection est basée, au moins en partie, sur la distance entre l'individu et l'outil de coupe (60),
et/ou dans lequel l'ensemble capteur (100) comprend en outre un tampon de branche de référence (140) configuré pour mettre en mémoire tampon le signal de branche de référence (122) afin de produire un signal de branche de référence mis en mémoire tampon (142), la sortie de l'ensemble capteur (104) étant basée, au moins en partie, sur le signal de branche de référence mis en mémoire tampon (142),
et/ou dans lequel l'ensemble capteur (100) comprend en outre un tampon de branche de détection (180) configuré pour mettre en mémoire tampon le signal de branche de détection (162) afin de produire un signal de branche de détection mis en mémoire tampon (162), la sortie de l'ensemble capteur (104) étant basée, au moins en partie, sur le signal de branche de détection mis en mémoire tampon (162).

4. L'outil motorisé (10) de l'une des revendications 1 à 3, dans lequel l'ensemble capteur (100) comprend en outre un circuit amplificateur (240) configuré pour amplifier le signal de tension différentielle (102) afin de produire un signal de tension différentielle amplifié (242), la sortie de l'ensemble capteur (104) étant basée, au moins en partie, sur le signal de tension différentielle amplifié (242).

5. L'outil motorisé (10) de la revendication 4, dans lequel le circuit amplificateur (240) est configuré pour générer un courant de sortie d'amplificateur, et en outre dans lequel l'ensemble capteur (100) comprend un convertisseur (260) configuré pour recevoir le courant de sortie d'amplificateur et pour générer une tension de sortie de convertisseur, dans lequel la tension de sortie de convertisseur est basée, au moins en partie, sur le courant de sortie d'amplificateur, et en outre dans lequel la sortie de l'ensemble capteur (104) est basée, au moins en partie, sur la tension de sortie de convertisseur, dans lequel de préférence le circuit amplificateur (240) comprend en outre un filtre configuré pour recevoir la tension de sortie de convertisseur et pour générer une tension de sortie de convertisseur filtrée,
dans lequel, de préférence, la tension de sortie du convertisseur filtrée est basée, au moins en partie, sur la tension de sortie du convertisseur, et de préférence encore, dans lequel la sortie de l'ensemble capteur (104) est basée, au moins en partie, sur la tension de sortie du convertisseur filtrée.

6. L'outil motorisé (10) de l'une des revendications 1 à 5, dans lequel l'outil motorisé (10) comprend en outre une structure d'isolation de l'outil coupe (62) configurée pour isoler électriquement l'outil coupe (60) d'au moins un autre composant de l'outil motorisé (10).

7. L'outil motorisé (10) de l'une des revendications 1 à 6, dans lequel le mécanisme de réaction mécanique (70) est configuré pour au moins l'un des éléments suivants :
(i) cesser sélectivement l'actionnement de l'outil de coupe (60) en réponse à la réception du signal de déclenchement (302) ;
(ii) arrêter sélectivement l'actionnement de l'outil de coupe (60) par le moteur (20) en réponse à la réception du signal de déclenchement (302) ;
(iii) rétracter sélectivement l'outil de coupe (60) dans l'outil motorisé (10) en réponse à la réception du signal de déclenchement (302) ;
(iv) couper sélectivement l'outil de coupe (60) en réponse à la réception du signal de déclenchement (302) ; et
(v) positionner sélectivement une structure de protection entre l'individu et l'outil de coupe (60) suite à la réception du signal de déclenchement (302).

8. L'outil motorisé (10) de l'une des revendications 1 à 7, dans lequel l'outil motorisé (10) est alimenté par une batterie, et/ou dans lequel l'outil motorisé (10) n'est pas directement relié à la terre,
et/ou dans lequel l'outil motorisé (10) comprend au moins l'un des éléments suivants :
(i) une scie
(ii) une scie circulaire
(iii) une scie circulaire portative
(iv) une scie à onglet
(v) une scie à bras radial
(vi) une scie à table
(vii) une scie à découper ;
(viii) une scie plongeante ;
(ix) une scie à chenilles ;
(x) scie à ruban
(xi) une scie sauteuse ;
(xii) scie à découper
(xiii) scie à panneaux
(xiv) un outil de coupe rotatif ;
(xv) une défonceuse
(xvi) une perceuse ; et
(xvii) une raboteuse, et/ou dans lequel l'outil motorisé (10) comprend au moins l'un des éléments suivants :
(i) un outil électrique portatif ; et
(ii) un outil électrique portable,
et/ou dans lequel l'outil de coupe (60) comprend au moins l'un des éléments suivants :
(i) une lame ;
(ii) une lame de scie ;
(iii) une lame de scie circulaire ;
(iv) une mèche ;
(v) une fraise ;
(vi) un foret ; et
(vii) un outil de coupe rotatif.

9. Procédé de fonctionnement d'un outil motorisé (10), le procédé comprenant :
bloquer l'alimentation en courant électrique d'un moteur (20) de l'outil motorisé (10) ;
vérifier le fonctionnement d'un ensemble de capteurs (100) de l'outil motorisé (10), l'ensemble de capteurs (100) étant configuré pour générer un signal de tension différentielle (102) indiquant que la distance entre un individu et un outil de coupe (60) de l'outil motorisé (10) est inférieure à une distance seuil ; et
permettre l'alimentation en courant électrique du moteur (20) en réponse à la vérification réussie du fonctionnement de l'ensemble capteur (100), dans lequel le procédé comprend en outre l'étalonnage de l'ensemble capteur (100), dans lequel l'ensemble capteur (100) comprend un circuit de pont (110), et dans lequel l'étalonnage comprend l'équilibrage du circuit de pont (110), et dans lequel l'équilibrage du circuit de pont (110) comprend l'équilibrage d'une tension de branche de référence d'une branche de référence du circuit de pont (110) et d'une tension de branche de détection d'une branche de détection (160) du circuit de pont (110).

10. Le procédé de la revendication 9, dans lequel l'équilibrage du circuit de pont (110) comprend l'équilibrage d'une phase de branche de référence de la branche de référence (120) du circuit de pont (110) et d'une phase de branche de détection de la branche de détection (160) du circuit de pont (110).

11. Le procédé de l'une quelconque des revendications 9 à 10, dans lequel l'étalonnage comprend le réglage du signal de tension différentielle (102) sur une plage cible, dans laquelle la plage cible inclut de préférence 0 volt, ou dans laquelle la plage cible exclut de préférence 0 volt.

12. Le procédé de l'une des revendications 9-11, dans lequel l'étalonnage répond à la vérification indiquant que l'ensemble de capteurs (100) n'est pas configuré pour détecter lorsque la distance entre l'individu et l'outil de coupe (60) est inférieure à la distance seuil.

13. Le procédé de l'une des revendications 9-12, où, après l'autorisation, le procédé comprend en outre la détection que la distance entre l'individu et l'outil de coupe (60) est inférieure à la distance seuil, où la vérification comprend de préférence la vérification que l'ensemble de capteurs (100) est configuré pour détecter que la distance entre l'individu et l'outil de coupe (60) est inférieure à la distance seuil.

14. Le procédé de l'une des revendications 9 à 13, dans lequel la détection comprend la détection capacitive utilisant une structure de couplage capacitif (220) de l'outil motorisé (10),
et/ou dans lequel la détection comprend en outre la génération d'un signal de tension différentielle (102) qui indique que la distance entre l'individu et l'outil de coupe (60) est inférieure à la distance seuil,
et/ou dans lequel, en réponse à la détection, le procédé comprend en outre l'arrêt du mouvement de l'outil de coupe (60).

15. Le procédé de l'une des revendications 9 à 14, dans lequel l'autorisation de l'alimentation en courant électrique comprend l'autorisation de l'alimentation en courant électrique pendant que l'outil motorisé (10) est libre d'une connexion directe à la terre.
